(19)

Europäisches
Patentamt
European
Patent Office
Office européen
des brevets

(11) **EP 4 467 945 A1**

(12) **EUROPEAN PATENT APPLICATION**

(43) Date of publication:
**27.11.2024 Bulletin 2024/48**

(21) Application number: **24178241.6**

(22) Date of filing: **27.05.2024**

(51) International Patent Classification (IPC):
*G01K 1/022* (2021.01)     *G01K 1/024* (2021.01)
*G01K 15/00* (2006.01)     *G01D 9/00* (2006.01)

(52) Cooperative Patent Classification (CPC):
**G01K 15/005; G01K 1/022; G01K 1/024;**
G01D 9/007

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 EP 23175618**

(71) Applicant: **Controlant hf.
201 Kopavogur (IS)**

(72) Inventor: **HERJOLFSSON, Gisli
201 Kopavogur (IS)**

(74) Representative: **Inspicos P/S
Agern Allé 24
2970 Hørsholm (DK)**

(54) **A METHOD AND A SYSTEM FOR VALIDATING OR CALIBRATING BENDABLELOGGER DEVICES**

(57)     This invention relates to a method and a system for validating or calibrating bendable logger devices utilizing a temperature-controlled air chamber, where the bendable logger devices are configured to be used for the real time temperature monitoring of an asset while transporting the asset from a beginning location to a destination location, each of the bendable logger devices comprising a processor, a bendable battery, a communication module and at least one sensing device including a temperature sensor, the method comprising the steps of:
• receiving the bendable logger devices at a first position, where the logger devices are in a folded state and are mutually connected,
• advancing, via an advancing device, a portion of the bendable logger devices from the first position towards a second position, while simultaneously advancing the portion from being in a folded state at the first position to an un- folded state during the transfer to the second position,

• activating the bendable logger devices as to enable the transmission, by the communication module, of the temperature values measured by the temperature sensors, wherein the step of advancing includes advancing the portion of the bendable logger devices through at least one controllable temperature air chamber from a first end towards a second end of the at least one controllable temperature air chamber, where the at least one controllable temperature air chamber has a pre-fixed reference temperature, the advancing speed of the portion of the bendable logger devices being such that the portion of the bendable logger devices' temperature has already reached the pre-fixed reference temperature prior to reaching the second end of the at least one controllable temperature air chamber, wherein the step of activating the bendable logger devices and transmitting the measured temperature values is performed at a position where the temperature of the bendable logger devices has reached the pre-fixed reference temperature.

FIG. 4

EP 4 467 945 A1

**Description**

FIELD OF THE INVENTION

The present invention relates to a method and a system for validating or calibrating bendable logger devices utilizing a temperature-controlled air chamber(s), where the bendable logger devices are to be used for the real time temperature monitoring of an asset while transporting the asset from a beginning location to a destination location.

BACKGROUND OF THE INVENTION

With the expansion and growth of global sourcing in the supply chain, more prevalent interest has been placed on automatic electronic monitoring of environment related parameters to increase food and drug safety and improve food defence systems throughout all areas of production, processing, storage, transportation and operations. Food and drug products require proper optimization of environment related parameters such as temperature during transport to assure shelf quality, longevity, and safety.

Logger devices are electronic monitoring devices commonly used for these purposes, and namely, to be associated to assets such as food, beverages or medicine to automatically monitor and record various environmental related parameters of the assets throughout the supply chain, such as temperature, humidity, acceleration, and air pressure, over time. A recent example of importance of such logger devices is the temperature monitoring of the COVID-19 vaccines, which is a critical monitoring parameter.

Logger devices used for real time monitoring have a wireless communication module allowing them to transmit positional data of the logger devices together with measured environmental related data of the asset wirelessly. Hence, enabling a real time supply chain monitoring solution during the transport of the assets. This means that positional data of the logger device (and thus of the asset) together with measured environmental data such as the temperature of the assets are provided in real time. By doing so, it is possible to monitor the position and the environmental conditions of the assets in real time. Thus, issues such as the temperature of the asset being too high or too low may be identified before these issues escalate which allows for proactive actions to prevent the assets from being damaged.

Through a new generation of ultrathin bendable batteries and other electronic components, it is possible to reduce the thickness of such logger devices from being in the centimetres range to being in the millimetre or a few millimetres range, making them effectively bendable logger devices, sometimes referred to as IoT labels or smart labels.

To ensure that the temperature sensors fulfil the temperature accuracy requirements set by the pharma industry, it is essential to verify that this accuracy requirement is fulfilled prior to using the bendable logger devices. To do so, the bendable logger devices need to be either calibrated to ensure accurate parameters readout, and/or validated where the temperature sensors' value is checked to be sufficiently close to a reference temperature value.

JP5232687B2 discloses a method for manufacturing and calibrating an externally powered thermometer tag for measuring the body temperature of a subject accurately.

The calibration utilizes thermostatic baths and external RF reading/writing devices to calibrate the temperature sensors of the temperature tags. A plurality of antennas is connected to processing units which include temperature sensors and wireless communication units making up the tags on a base sheet. The base sheet is then configured to go into the thermostatic bath and over the RF reader/writer, which is located at the bottom of the bath. The RF device reads the temperature of the known thermostatic bath e.g. (37°C) and the measured temperature of the temperature sensor of the tag. The RF device then writes both the temperature of the thermostatic bath and the temperature tags to the storage units of the temperature tags, which later becomes the calibration data for the temperature tag.

In some cases, more than one bath may be prepared at different temperatures e.g. (32°C, 36°C, or/and 42°C), where each temperature is written into the storage unit of the tags as calibration data.

When the tags are later used on a subject, an external RF reading/writing device activates the antenna by sending an electromotive force, which in turn activates the temperature tag. The RF device then reads the temperature from the temperature sensor and the calibration data to derive the subject's temperature.

As mentioned JP5232687B2 sometimes needs to utilize more than one bath for the calibration of the temperature tags and within said baths multiple RF devices must be deposited for the communication with said tags. The preparation of all these baths and RF devices is very inefficient, expensive and time-consuming.

Moreover, JP5232687B2 requires that the temperature tags are robust against the heating/cooling agent used during the temperature calibration. Furthermore, temperature calibration for temperatures below zero, and particularly temperatures well below zero e.g. (-30°C) requires certain cooling agents that may easily damage the temperature tags during the temperature calibration.

SUMMARY OF THE INVENTION

It is an object of the invention to overcome the above-mentioned problem and provide a solution that enables large scale efficient calibration and/or validation of bendable logger devices that are configured to be used in real-time monitoring.

In a first aspect of the invention, a method is provided for validating or calibrating bendable logger devices utilizing a temperature-controlled air chamber, where the bendable logger devices are configured to be used in a real time temperature monitoring of an asset while transporting the asset from a beginning location to a destination location, each of the bendable logger devices comprising a processor, a bendable battery, a communication module and at least one sensing device including a temperature sensor, the method comprising:

- receiving the bendable logger devices at a first position, where the bendable logger devices are in a folded state and are mutually connected,
- advancing, via an advancing device, a portion of the bendable logger devices from the first position towards a second position, while simultaneously advancing the portion from being in a folded state at the first position to an un-folded state during the transfer to the second position,
- activating the bendable logger devices as to enable the transmission, by the communication module, of the temperature values measured by the temperature sensors,

wherein the step of advancing includes advancing the portion of the bendable logger devices through at least one controllable temperature air chamber from a first end towards a second end of the at least one controllable temperature air chamber, where the at least one controllable temperature air chamber has a pre-fixed reference temperature, the advancing speed of the portion of the bendable logger devices being such that the portion of the bendable logger devices' temperature has already reached the pre-fixed reference temperature prior to reaching the second end of the at least one controllable temperature air chamber, wherein the step of activating the bendable logger devices and transmitting the measured temperature values is performed at the position where the temperature of the bendable logger devices has reached the pre-fixed reference temperature, wherein if a transmitted temperature value of a bendable logger device selected from the transmitted measured temperature values deviates from the reference temperature of the air chamber then the bendable logger device is to be recalibrated.

Accordingly, a simple solution is provided to validate or calibrate such bendable logger devices in a fast and reliable manner. A certain tolerance range may be allowed, e.g. the logger device may be x% above or below the reference temperature, e.g. 0.5% tolerance may be allowed. A highly accurate reference temperature sensor is preferably placed at the second end of the at least one controllable temperature air chamber and used to measure the reference temperature that is used in performing the calibration or the validation of the bendable logger devices.

The term bendable logger devices may be understood as logger devices having the thickness within the millimetre range or even less and containing ultrathin bendable battery. One specific example of such a battery is an electrochemical cell comprising a solid-state printable anode layer, a cathode layer, and a non-aqueous gel electrolyte layer coupled to the anode and the cathode layers. The electrolyte layer provides physical separation between the anode and cathode layers, and includes a composition configured to provide ionic communication between the anode and the cathode layers by facilitating the transmission of multivalent ions between the anode and the cathode layers.

In an embodiment, the at least one controllable temperature air chamber comprises two or more controllable temperature air chambers having different pre-fixed reference temperatures. As an example, the two controllable temperature air chambers could have two reference temperatures, such as -20°C and +30°C, and in that way, when validating the temperature, two comparisons with said reference temperatures is performed.

In another embodiment, the at least one controllable temperature air chamber comprises three or more controllable temperature air chambers having different pre-fixed reference temperatures, where the measured temperature data transmitted from the three or more controllable temperature air chambers is utilized as input in calibrating the temperature sensor. This is as an example relevant when the temperature is determined via measuring resistance and converting it to temperature values, by e.g. connecting Negative Temperature Coefficient (NTC) thermistor to a Wheatstone bridge where the temperature may then be calculated using the Steinhart-Hart relation:

$$\frac{1}{T_1} = a + b \cdot \ln(R_1) + c \cdot [\ln(R_1)]^3$$

$$\frac{1}{T_2} = a + b \cdot \ln(R_2) + c \cdot [\ln(R_2)]^3$$

$$\frac{1}{T_3} = a + b \cdot \ln(R_3) + c \cdot [\ln(R_3)]^3$$

For simplicity, assuming $R_1=R_2=R_3=R$ and performing the steps for the three pre-fixed reference temperatures $T_1, T_2, T_3$, the Steinhart-Hart relation becomes:

$$T = \frac{1}{a + b \cdot \ln(R) + c \cdot [\ln(R)]^3}$$

where the Steinhart coefficients $a$, $b$, c may be determined for each individual bendable logger device.

In an embodiment, the bendable logger devices are folded together in a pleated manner. In another embodiment, the step of advancing the portion of the bendable logger devices includes capturing, by the advancing device, a bendable logger device exposed from the remaining bendable logger devices while it is in a folded state and advancing it from the first position towards the second position hence changing it from a pleated to an un-pleated state.

In another embodiment, the bendable logger devices are folded together in a cylindrical manner around a central elongated axis. In an embodiment, the step of advancing the portion of the bendable logger devices includes capturing, by the advancing device, a folded logger device at the free end of the connected bendable logger devices on the outer periphery of the cylindrically shaped bendable logger devices bundle and advancing it from the first position towards the second position hence changing it from a folded to an unfolded state.

In an embodiment, the portion of the bendable logger device includes two or more logger devices placed together in a stack. Accordingly, this includes two or more bendable logger devices attached together, which enhances the throughput of the validation or calibration.

In a second aspect of the invention, a system is provided configured for validating or calibrating bendable logger devices utilizing a temperature-controlled air chamber, where the bendable logger devices are to be used for a real-time temperature monitoring of an asset while transporting the asset from a beginning location to a destination location, each of the bendable logger devices comprising a processor, a bendable battery, a communication module and at least one sensing device including a temperature sensor, the system comprising:

- a receiving unit for receiving the bendable logger devices at a first position, where the logger devices are in a folded state and are mutually connected,
- an advancing device for advancing a portion of the bendable logger devices from the first position towards a second position, while simultaneously advancing the portion from being in a folded state at the first position to an un-folded state during the transfer to the second position,
- an activation mechanism for activating the bendable logger devices as to enable the transmission, by the communication module, of the temperature values measured by the temperature sensors, and
- at least one controllable temperature air chamber able to maintain an area at a required temperature,

wherein advancing the portion of the bendable logger devices by the advancing device includes advancing the portion through at least one controllable temperature air chamber from a first end towards a second end of the at least one controllable temperature air chamber, where the at least one controllable temperature air chamber has a pre-fixed reference temperature, the advancing speed of the portion of the bendable logger devices being such that the portion of the bendable logger devices' temperature has already reached the pre-fixed reference temperature prior to reaching the second end of the at least one controllable temperature air chamber, wherein the step of activating the bendable logger devices and transmitting the measured temperature values is performed at a position where the temperature of the bendable logger devices has reached the pre-fixed reference temperature, wherein if a transmitted temperature value of a bendable logger device selected from the transmitted measured temperature values deviates from the reference temperature of the air chamber then the bendable logger device is to be recalibrated.

The at least one controllable temperature air chamber comprises in one embodiment two or more controllable temperature air chambers placed in a series having different pre-fixed reference temperatures, where each controllable temperature air chamber comprises, a housing having two opposite open ends defining said first and second ends.

The activation mechanism comprises in one embodiment an inductive current mechanism where an inductive current created via the relative speed difference between the bendable logger devices and a magnet is utilized to temporarily power the transmission by the communication module.

In another embodiment, the activation mechanism comprises an electrical power source where activating the bendable logger devices is performed via contact with the electrical power source.

In an embodiment, the advancing device comprises a speed adjuster configured to dynamically adjust the advancing speed of the bendable logger devices, such as that by adapting the speed of the bendable logger devices until said pre-fixed reference temperature is reached. This may also include stopping the movement of the bendable labels when needed to reach the pre-fixed at reference temperature. An advance solution is thus provided to ensure that the bendable labels reach the pre-fixed reference temperature.

In an embodiment, the at least one controllable temperature air chamber comprises three or more controllable temperature air chambers having different pre-fixed reference temperatures arranged in a sequence, where the measured temperature data transmitted from the three or more controllable temperature air chambers is utilized as input in calibrating the temperature sensor. As mentioned above, for some temperature sensors, several readouts, typically three or even more are required to calibrate the bendable logger device.

In general, the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Figures 1 shows a flowchart of a method according to the present invention for validating or calibrating bendable logger devices,
Figure 2 shows a system according to the present invention,
Figures 3 shows a perspective view of an embodiment of bendable logger devices in a folded and partially un-folded state together with three controllable temperature air chambers, Figure 4 shows a side view of the embodiment shown in figure 3,
Figure 5 depicts another alternative of the embodiment where the bendable logger devices are folded together in a pleated manner, and
Figure 6 shows an exemplary Wheatstone bridge when a Negative Temperature Coefficient (NTC) thermistor is used as a temperature sensor.

DESCRIPTION OF EMBODIMENTS

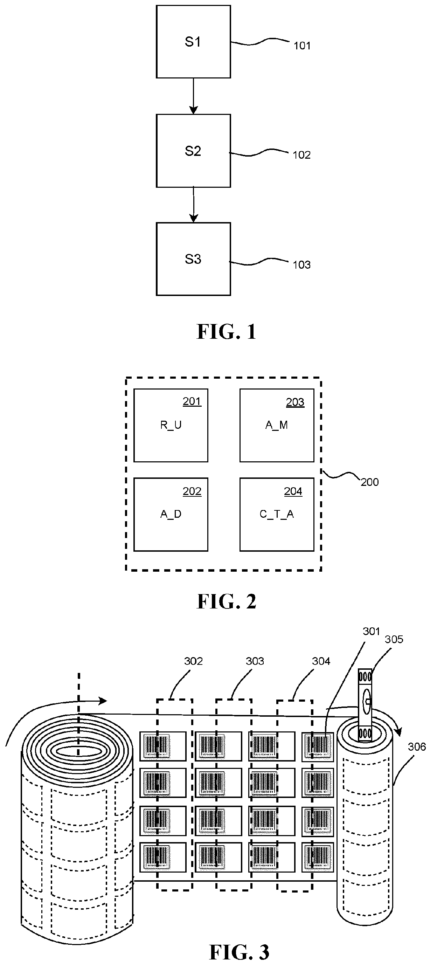

Figures 1 shows a flowchart of a method according to the present invention for validating or calibrating bendable logger devices. Each of the bendable logger devices further comprises a processor, a communication module and at least one sensing device including a temperature sensor. These remaining components are also within the millimetre range of thickness.

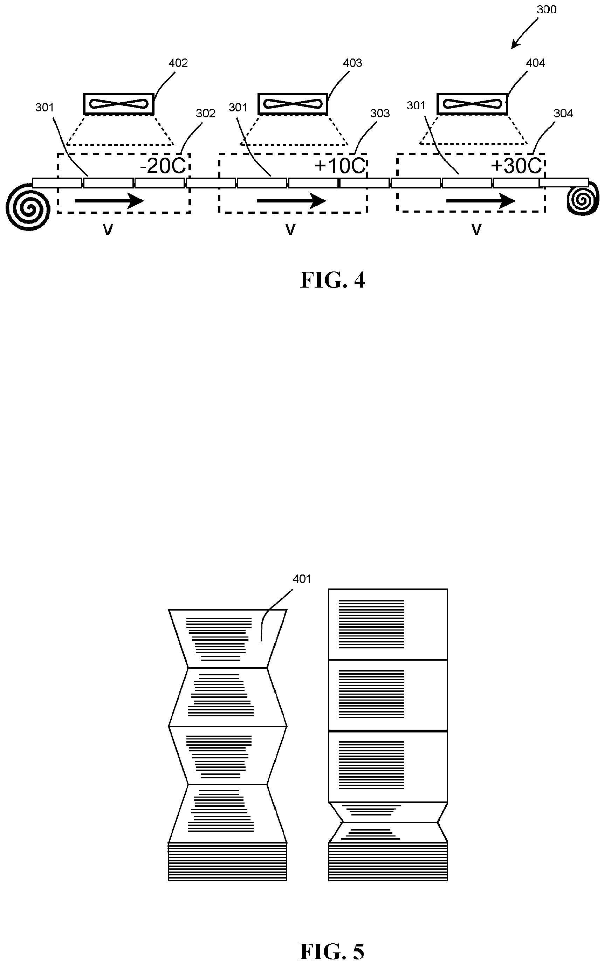

In step (S 1) 101, the bendable logger devices are received at a first position, where the logger devices are in a folded state and are mutually connected. Figures 3 and 5 illustrate two exemplary embodiments where figure 3 shows how the bendable logger devices are rolled together forming a cylinder shape and figure 5 shows how the bendable logger devices are folded together in a pleated manner.

In step (S2) 102, a portion of the bendable logger devices is advanced, via an advancing device, from the first position towards a second position, while simultaneously advancing the portion from being in a folded state at the first position to an un-folded state during the transfer to the second position.

In step (S3) 103, the bendable logger devices are activated as to enable the transmission, by the communication module, of the temperature values measured by the temperature sensors.

The step of advancing includes advancing the portion of the bendable logger devices through at least one controllable temperature air chamber from a first end towards a second end of the at least one controllable temperature air chamber, where the at least one controllable temperature air chamber has a pre-fixed reference temperature. The advancing speed of the portion of the bendable logger devices is such that the portion of the bendable logger devices' temperature has already reached the pre-fixed reference temperature prior to reaching the second end of the at least one controllable temperature air chamber. The step of activating the bendable logger devices and transmitting the measured temperature values is performed at a position where the temperature of the bendable logger devices has reached the pre-fixed reference temperature. These temperature values are then compared with the temperature values measured by a reference sensor or probe at each of the controllable temperature air chamber(s). Those bendable logger devices where there is a mismatch exceeding given reference value, e.g. 0.5% deviation, need then to be re-calibrated.

Figure 2 depicts a block chart of a system 200 according to the present invention for validating or calibrating bendable logger devices, each of the bendable logger devices comprising a processor, a bendable battery, a communication module and at least one sensing device including a temperature sensor.

The system comprises a receiving unit 201, an advancing device 202, an activation mechanism 203 and at least one controllable temperature air chamber 204.

The receiving unit 201 is configured for receiving the bendable logger devices at the first position, where the logger devices are in a folded state and are mutually connected. The receiving unit may as an example comprise an elongated axis to receive the bendable logger devices in a roll formation. This will be discussed in more details later.

The advancing device 202 is configured to advance a portion of the bendable logger devices from the first position towards a second position, while simultaneously advancing the portion from being in a folded state at the first position to an un- folded state during the transfer to the second position.

The activation mechanism 203 is configured to activate the bendable logger devices as to enable the transmission, by the communication module, of the temperature values measured by the temperature sensors. The activation mechanism comprises in one embodiment an inductive current mechanism where an inductive current created via the relative speed difference between the bendable logger devices and a magnet is utilized to temporarily power the transmission by the communication module. In another embodiment, the activation mechanism comprises an electrical power source where activating the bendable logger devices is performed via contact with the electrical power source.

Figures 3 and 4 show an exemplary embodiment of said system where three controllable temperature air chambers 302-304 are utilized and as already mentioned, the bendable logger devices 301 arrive folded together in a cylindrical manner around a central elongated axis as indicated by the dotted line in figure 3.

The step of advancing the portion of the bendable logger devices includes capturing at the very beginning, by the advancing device (not shown here) or manually, a free end of the bendable logger devices at an outer periphery of the cylindrically bendable logger devices bundle while being in a folded state and advancing them by the advancing device at speed V from the first position towards the second position resulting in it being in said un-folded state. The advancing device may as an example include a motor driven axle 305 that engages with the free end and advances the left roll towards the right roll 306 in a clockwise manner, where during the advancing said temperature validation or calibration is performed.

The controllable temperature air chambers is provided with the necessary cooling/heating mechanisms 402-404 that are well known to a person skilled in the art, such as a chamber containing the necessary heating and/or cooling means, such as fan to equally distribute the cold air within chamber 302, and/or heating elements to supply as shown here the reference temperatures of +10°C and +30°C.

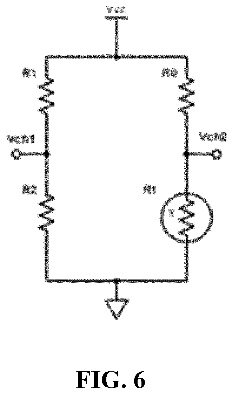

Different types of temperature sensors that are well known to a person skilled in the art may be implemented, such as, but not limited to, Negative Temperature Coefficient (NTC) thermistor connected to a Wheatstone bridge as shown in figure 6, where the resistance between the wires of the NTC thermistor changes with temperature fluctuations which results in changes in the voltages Vch1 and Vch2, where the thermistor resistance equation is:

$$R = \frac{\left(\frac{\text{Vch2}}{\text{Vch1}}\right) \cdot \text{R0} \cdot \text{R2}}{R1 + R2 \cdot \left(1 - \left(\frac{\text{Vch2}}{\text{Vch1}}\right)\right)}$$

As an example, the resistor values R0, R1 and R2 may all be 10kQ. If equality of the resistors is assumed the equation is simplified to be:

$$R = \frac{\text{R0} \cdot \text{Vch2}}{2 \cdot (\text{Vch1} - \text{Vch2})}$$

Once the voltages are measured, and the temperature is calculated from the measured values. The temperature may then be calculated using the Steinhart-Hart relation:

$$T = \frac{1}{a + b \cdot \ln(R) + c \cdot \ln(R)^3)}$$

where a, b and c are the Stein-Hart coefficients. Accordingly, due to there being three unknows parameters; three different temperature chambers as shown here with three different pre-fixed reference temperatures are needed.

Figure 5 depicts, as already mentioned, another alternative of the embodiment where the bendable logger devices are folded together in a pleated manner and the bendable logger devices are moved from being in a folded state as shown on the left side and advanced from the first position towards the second position resulting in it being rearranged into an un-pleated state as depicted on the right side of figure 5.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of validating or calibrating bendable logger devices utilizing a temperature-controlled air chamber, where the bendable logger devices are configured to be used for the real time temperature monitoring of an asset while transporting the asset from a beginning location to a destination location, each of the bendable logger devices comprising a processor, a bendable battery, a communication module and at least one sensing device including a temperature sensor, the method comprising the steps of:

    • receiving the bendable logger devices at a first position, where the logger devices are in a folded state and are mutually connected,
    • advancing, via an advancing device, a portion of the bendable logger devices from the first position towards a second position, while simultaneously advancing the portion from being in a folded state at the first position to an un-folded state during the transfer to the second position,
    • activating the bendable logger devices as to enable the transmission, by the communication module, of the temperature values measured by the temperature sensors,

wherein the step of advancing includes advancing the portion of the bendable logger devices through at least one controllable temperature air chamber from a first end towards a second end of the at least one controllable temperature air chamber, where the at least one controllable temperature air chamber has a pre-fixed reference temperature, and the advancing speed of the portion of the bendable logger devices being such that the portion of the bendable logger devices' temperature has already reached the pre-fixed reference temperature prior to reaching the second end of the at least one controllable temperature air chamber, wherein the step of activating the bendable logger devices and transmitting the measured temperature values is performed at a position where the temperature of the bendable logger devices has reached the pre-fixed reference temperature, wherein if a transmitted temperature value of a bendable logger device selected from the transmitted measured temperature values deviates from the reference temperature of the air chamber then the bendable logger device is to be recalibrated.

2.  The method according to claim 1, wherein the at least one controllable temperature air chamber comprises two or more controllable temperature air chambers having different pre-fixed reference temperatures.

3.  The method according to claim 1, wherein the at least one controllable temperature air chamber comprises three or more controllable temperature air chambers having different pre-fixed reference temperatures, where the measured temperature data transmitted from the three or more controllable temperature air chambers is utilized as input in calibrating the temperature sensor.

4.  The method according to any of the preceding claims, wherein the bendable logger devices are folded together in a pleated manner.

5.  The method according to claim 4, wherein the step of advancing the portion of the bendable logger devices includes capturing, by the advancing device, a bendable logger device exposed from the remaining bendable logger devices while it is in a folded state and advancing it from the first position towards the second position changing it from a pleated to an un-pleated state.

6.  The method according to any of the preceding claims, wherein the bendable logger devices are folded together in a cylindrical manner around a central elongated axis.

7.  The method according to claim 6, wherein the step of advancing the portion of the bendable logger devices includes capturing, by the advancing device, a folded logger device at the free end of the connected bendable logger devices on the outer periphery of the cylindrically shaped bendable logger devices bundle and advancing it from the first position towards the second position hence changing it from a folded to an unfolded state.

8.  The method according to any of the preceding claims, wherein the portion of the bendable logger device includes two or more logger devices placed together in a stack.

9.  A system for validating or calibrating bendable logger devices utilizing a temperature-controlled air chamber, where the bendable logger devices are configured to be used for the real time temperature monitoring of an asset while transporting the asset from a beginning location to a destination location, each of the bendable logger devices comprising a processor, a bendable battery, a communication module and at least one sensing device including a temperature sensor, the system comprising:

    • a receiving unit for receiving the bendable logger devices at a first position, where the logger devices are in a folded state and are mutually connected,
    • an advancing device for advancing a portion of the bendable logger devices from the first position towards a second position, while simultaneously advancing the portion from being in a folded state at the first position to an un-folded state during the transfer to the second position,
    • an activation mechanism for activating the bendable logger devices as to enable the transmission, by the communication module, of the temperature values measured by the temperature sensors, and
    • at least one controllable temperature
    • air chamber able to maintain an area at a required temperature,

    wherein advancing the portion of the bendable logger devices by the advancing device includes advancing the portion through at least one controllable temperature air chamber from a first end towards a second end of the at least one controllable temperature air chamber, where the at least one controllable temperature air chamber has a pre-fixed reference temperature, the advancing speed of the portion of the bendable logger devices being such that the portion of the bendable logger devices' temperature has already reached the pre-fixed reference temperature prior to reaching the second end of the at least one controllable temperature air chamber, wherein the step of activating the bendable logger devices and transmitting the measured temperature values is performed at a position where the temperature of the bendable logger devices has reached the pre-fixed reference temperature, wherein if a transmitted temperature value of a bendable logger device selected from the transmitted measured temperature values deviates from the reference temperature of the air chamber then the bendable logger device is to be recalibrated.

**10.** The system according to claim 9, wherein the at least one controllable temperature air chamber comprises two or more controllable temperature air chambers placed in a series having different pre-fixed reference temperatures, where each controllable temperature air chambers comprises, a housing having two opposite open ends defining said first and second ends.

**11.** The system according to claim 9 or 10, wherein the activation mechanism comprises an inductive current mechanism where an inductive current created via the relative speed difference between the bendable logger devices and a magnet is utilized to temporarily power the transmission by the communication module.

**12.** The system according to claim 9 or 10, wherein the activation mechanism comprises an electrical power source where activating the bendable logger devices is performed via contact with the electrical power source.

**13.** The system according to any of the claims 9 to 12, wherein the advancing device comprises a speed adjuster configured to dynamically adjust the advancing speed of the bendable logger devices, such as by adapting the speed of the bendable logger devices until said pre-fixed reference temperature is reached.

**14.** The system according to any of the claims 9 to 13, wherein the at least one controllable temperature air chamber comprises three or more controllable temperature air chambers having different pre-fixed reference temperatures arranged in a sequence, where the measured temperature data transmitted from the three or more controllable temperature air chambers is utilized as input in calibrating the temperature sensor.

**FIG. 1**

**FIG. 2**

**FIG. 3**

**FIG. 4**

**FIG. 5**

**FIG. 6**

Europäisches
Patentamt

European
Patent Office

Office européen
des brevets

# EUROPEAN SEARCH REPORT

Application Number

EP 24 17 8241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 232687 B2 (TERUMO CORP) 10 July 2013 (2013-07-10) * paragraph [0016] - paragraph [0029]; figure 1 * * paragraph [0070] - paragraph [0079]; figure 9 * | 1-14 | INV. G01K1/022 G01K1/024 G01K15/00 ADD. G01D9/00 |
| A | CN 110 907 069 A (CHONGQING SOUTHWEST INTEGRATED CIRCUIT DESIGN CO LTD) 24 March 2020 (2020-03-24) * the whole document * | 1-14 | |

TECHNICAL FIELDS SEARCHED (IPC)

G01D
G06Q

The present search report has been drawn up for all claims

| Place of search | Date of completion of the search | Examiner |
|---|---|---|
| The Hague | 11 July 2024 | Rosello Garcia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8241

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | | Publication date | Patent family member(s) | | Publication date |
|---|---|---|---|---|---|
| JP 5232687 | B2 | 10-07-2013 | JP 5232687 B2 | | 10-07-2013 |
| | | | JP 2010197243 A | | 09-09-2010 |
| CN 110907069 | A | 24-03-2020 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5232687 B